# EUROPEAN PATENT SPECIFICATION

(11) **EP 1 180 439 B1**
(45) Date of publication and mention of the grant of the patent: **16.03.2005**
(21) Application number: 00830566.6
(22) Date of filing: 07.08.2000
(51) Int. Cl.: B60C 27/06

(54) **Fastening device for a cable for snow chains**
Feststellvorrichtung eines Kabels für Schleuderketten
Dispositif de fixation d'un câble pour chaînes à neige

(43) Date of publication of application: 20.02.2002
(73) Proprietor: König S.p.A., 23847 Molteno (IT)
(72) Inventor: Airoldi, Romolo, 23900 Lecco (IT); Arrigoni Neri, Marco, 23811 Ballabio (LC) (IT)
(74) Representative: Petruzziello, Aldo

(56) References cited:
- EP-A- 0 255 119
- PATENT ABSTRACTS OF JAPAN vol. 1996, no. 07, 31 July 1996 (1996-07-31) & JP 08 067119 A (OHTSU TIRE &RUBBER CO LTD:THE), 12 March 1996 (1996-03-12)

## Description

The present invention relates to a fastening device for snow chains or anti-skid devices intended for mounting on the tires of vehicles.

When a vehicle travels on a road surface covered with snow, sleet or ice, its tires do not have a good grip and dangerous swerving or skidding of the vehicle can occur. To avoid these problems it is customary to use anti-skid devices, commonly called snow chains.

Snow chains, normally mounted on the driving wheels of the vehicle, bite into the snow and/or ice deposited on the road surface, increasing the tread traction and allowing the vehicle tires to achieve a good grip.

As is known, a snow chain generally consists of two side members (chains, flexible cables, steel wires, ropes or the like) which during use are closed in a ring on the inner face and the outer face of the wheel, respectively. These side members are connected by a series of chain portions variously disposed to achieve tread traction, the whole being completed by a tensioning device for said members, known as a tensioner.

In particular a fastening device must be provided to close in a ring the cable disposed in the inner part of the wheel.

The cable fastening devices in accordance with the known art have a closing block fixed to an end of the cable able to receive, in a locking fit, the other free end of the cable so as to bring about closure in a ring of the cable. Retention of the free end of the cable inside the fastening device is ensured when axial traction forces act on the cable and on the closing device, tending to widen the ring formed by the cable.

When the user has to remove the snow chains, in order to cause uncoupling between the free end of the cable and the fastening device he must push on the cable in the direction of narrowing of the ring formed by the cable. Consequently the free end of the cable disengages from the fastening device and can be removed therefrom, opening the ring formed by the cable.

Said operation, necessary for opening fastening devices according to the known art, is quite complex and not immediate. In fact when the user wants to open the fastening device of the cable, he instinctively tends to exert traction on the cable in the direction of widening of the ring to cause the free end of the cable to come out of the fastening device. Instead, before this operation, the user must push on the cable in the direction of narrowing of the ring to cause disengagement of the free end of the cable from the fastening device.

Furthermore, the procedure for operating the fastening device for opening of the ring formed by the cable is further complicated by the fact that said fastening device is situated behind the wheel and therefore is not readily accessible and not visible to the user.

A fastening device according to the preamble of Claim 1 is disclosed in EP-A-0 255 119.

The object of the present invention is to eliminate the drawbacks of the prior art, providing a fastening device for a cable for snow chains that is practical, easy to use, economical and simple to make.

This object is achieved in accordance with the invention with the characteristics listed in appended independent claim 1.

Preferred embodiments of the invention will be apparent from the dependent claims.

The fastening device for a cable for snow chains is irremovably fixed to an end of the cable. The other end of the cable is free to be inserted in and removed from the fastening device so as to close the cable in a ring or open the ring formed by the cable.

The fastening device comprises a pawl hinged to its body so as to allow closing in a ring of the cable by insertion of the free end of the cable into said fastening device and opening of the ring formed by the cable through pressure on said pawl by the user to allow extraction of said free end of the cable from the fastening device.

The advantages of the fastening device according to the invention appear evident. In fact, in order to open the ring formed by the cable, the user must exert pressure on the pawl of the fastening device and simultaneously exert traction on the cable. These operations are immediate and easy for the user even if he has to work with the fastening device disposed on the inward facing surface of the wheel.

Further characteristics of the invention will be made clearer by the detailed description that follows, referring to purely exemplary and therefore non-limiting embodiment thereof, illustrated in the appended drawings in which:
Figure 1 is a front view, taken from the inward facing side, of a wheel to which a snow chain with the fastening device according to the invention is fitted;
Figure 2 is a front view of the wheel in Figure 1, taken from the outward facing side;
Figure 3 is an enlarged front view of the fastening device in Figure 1, in which the two ends of the cable are separated from the fastening device;
Figure 4 is a view partially in longitudinal section of the fastening device in Figure 3;
Figure 5 is a cross sectional view along section line V-V in Figure 3;
Figure 6 is a cross sectional view along section line VI-VI in Figure 3;
Figure 7 is a cross sectional view along section line VII-VII in Figure 3;
Figure 8 is a view, like Figure 3, illustrating the fastening device in which one end of the cable has been secured and the other is being inserted;
Figure 9 is a view partially in longitudinal section of Figure 8;
Figure 10 is a sectional view along section line X-X in Figure 8;
Figure 11 is a view like Figure 10, illustrating the fastening device in the position with the cable closed.

A cable fastening device for snow chains according to the invention is described with the aid of the figures.

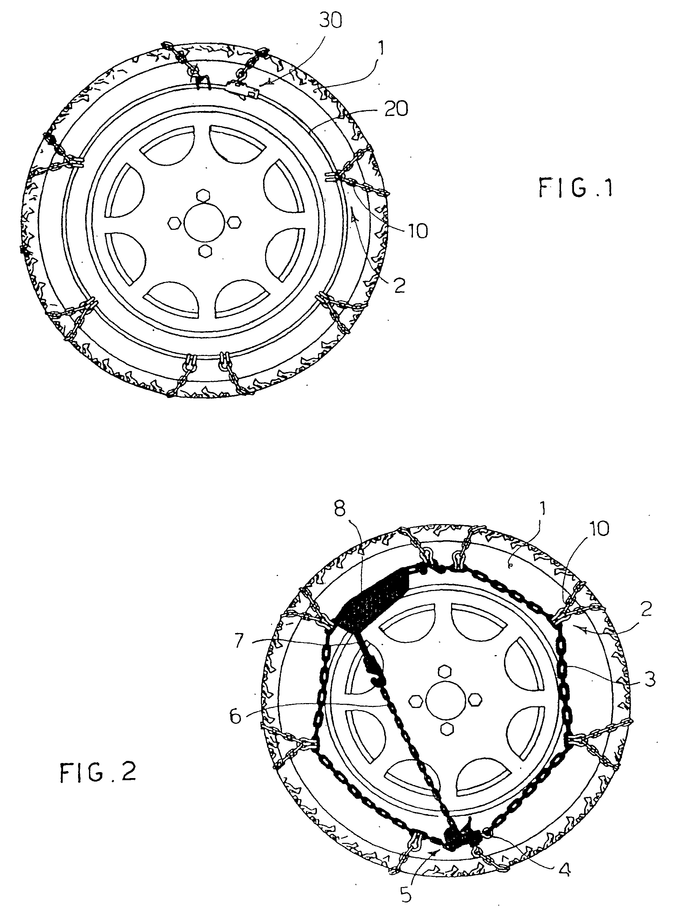

Figures 1 and 2 show the inward facing side and the outward facing side, respectively, of a wheel 1 of a vehicle, on which a snow chain, denoted as a whole with reference numeral 2, is fitted as an anti-skid device.

The chain 2 comprises: a member 20 closed in a circle or ring on the inner part of the wheel, a member 3 disposed in a circle or ring on the outer part of the wheel and a series of portions 10 of anti-skid chain, disposed transversally on the tread, which form a connection between the outer member 3 and the inner one 20.

With reference to Figure 2, an end 4 of the outer ring 3 is hooked, in a per se known manner, to a no-return block (5) and the other end 6 is connected to a terminal portion of chain or cable 7 contained in a self-tensioning device 8 which causes tensioning of the terminal portion 7.

As shown in Figure 1, the inner ring 20 is formed by a cable which is closed by means of a fastening device according to the invention, denoted as a whole with reference numeral 30.

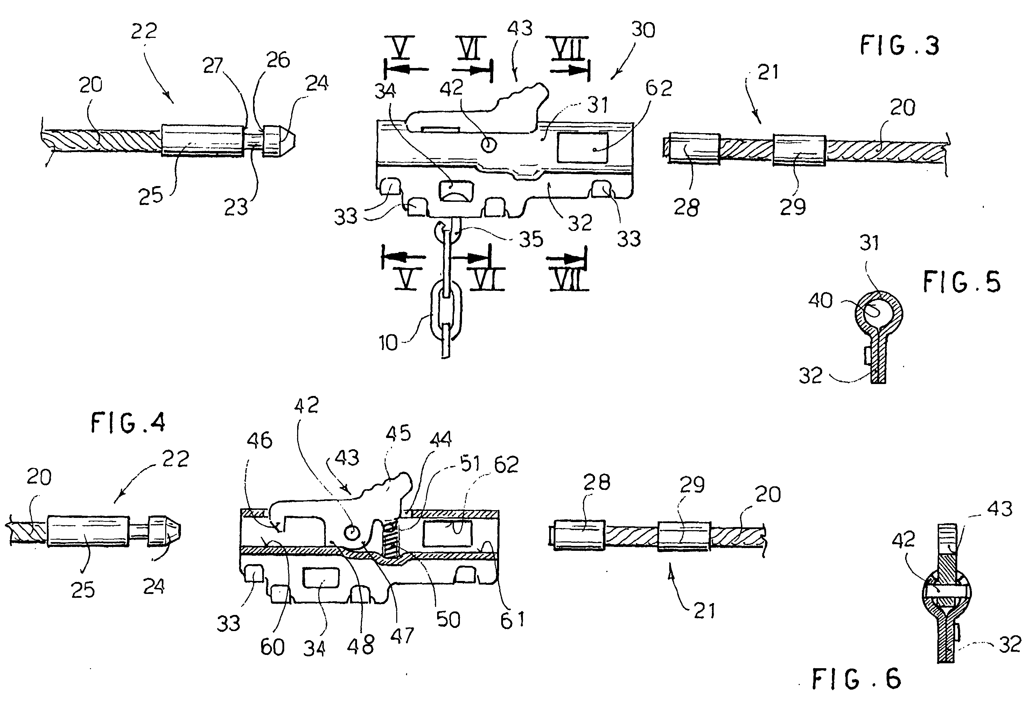

As better shown in Figures 3-7, the fastening device 30 comprises a body 31 with a substantially hollow tubular shape. A wall 32 protrudes longitudinally from the outer surface of the tubular body 31. The wall 32 has an aperture 34 at the base of which is hinged a hook 35 to which the link of a chain portion 10 is hooked.

The body of the fastening device 30, as better shown in Figure 5, can be obtained, for example, from a plate of sheet metal bent so as to form a substantially cylindrical cavity 40, with the two superimposed end flaps forming the wall 32. Said end flaps are held together by means of locking tongues 33 which are folded back on themselves.

In a central position in the tubular body 31 a pin 42 is provided (Figure 6) which passes radially therethrough. Hinged on the pin 42 is a pawl lever 43 the upper part of which extends through a longitudinal slot 44 made in the tubular body 31.

The upper part of the pawl 43 has an upward inclined rear end 45 suitable to be pressed by a user. The front end of the pawl 43, on the other hand, has a detent 46 protruding downward inside the tubular body 31.

The lower part of the pawl has a cam surface 47 which can turn in a complementary cam surface formed in the inner wall of the tubular body 31 and an abutment surface 48 which abuts against the inner surface of the tubular body 31.

Inside the tubular body 31 a spring 50 is provided which is interposed between the lower part 51 of the rear end 45 of the pawl and the inner wall of the tubular body 31. The action of the spring pushes the lower part 51 of the rear end of the pawl; consequently the pawl tends to turn around the pivot 42 until the abutment surface 48 abuts against the inner wall of the tubular body 31. In this position the detent 46 is situated inside the tubular body 31.

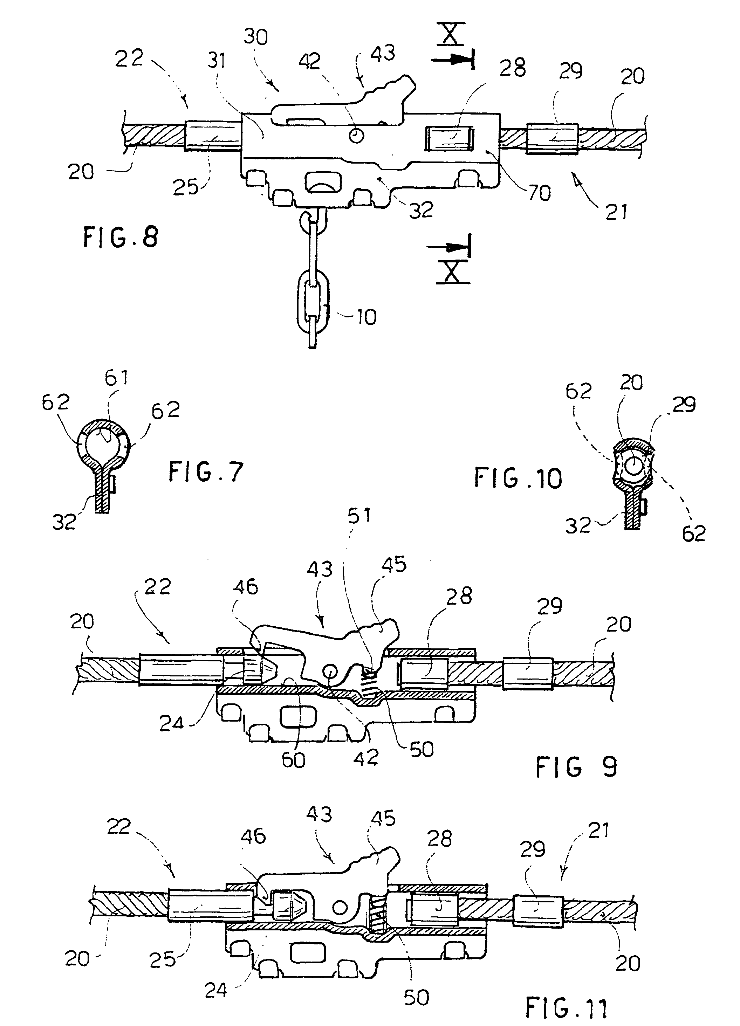

The pawl 43 divides the cavity 40 of the tubular body into a front cavity 60 and a rear cavity 61. In the rear part of the tubular body 31 two apertures 62 (Fig. 7) are provided, disposed in symmetrical positions with respect to the rear cavity 61.

As shown in Figure 3, the cable 20 has two ends: a first end 21 destined to be irremovably secured to the fastening device 30 and a second end 22 destined to be inserted in/removed from the fastening device 30 to obtain closing/opening of the ring formed by the cable 20.

The end 21 of the cable 20 has a first cylinder 28 and a second cylinder 29 fixed to the cable 20. The first cylinder 28 is at a slight distance from the second cylinder 29. In order to secure the end 21 to the fastening device, the first cylinder 28 is inserted in the rear cavity 61, until the first cylinder 28 is between the apertures 62 (Figure 8). At this point a caulking operation is carried out on the rear end 70 of the tubular body 31. In this manner, as shown also in Figure 10, the cylinder 28 is closed in the apertures 62 of the tubular body 31. Axial movement of the end 21 of the cable with respect to the fastening device is thus prevented whereas relative rotation between the end 21 of the cable and the fastening device 30 around their own axes is permitted.

The free end 22 of the cable 20 comprises a cylindrical member 25 fixed to the cable 20 and an ogive head 24. Between the cylindrical member 20 and the ogive head 24 is interposed a cylindrical tang 23 with a smaller diameter than the cylindrical member 25 and the ogive head 24, so as to form two abutment surfaces 27 and 26, respectively, on the front end of the cylindrical member 25 and on the rear end of the ogive head 24.

Operation of the fastening device according to the invention is described below, with reference in particular to Figures 4, 9 and 11. When the cable 20 is in the open state its end 22 is at a distance from the fastening device 30 (Figure 4).

When fastening of the cable 20 is desired, the end 22 of the cable 20 is inserted inside the front cavity 60 of the tubular body 31 (Figure 9). The ogive head 24 of the end 22 of the cable abuts against the detent 46 of the pawl 43 causing lifting of the detent 46 and thus rotation in a clockwise direction of the pawl 43 around the pivot 42. Consequently the lower part 51 of the rear part 45 of the pawl 43 compresses the spring 50, loading it.

As shown in Figure 11, when the ogive head 24 passes the detent 46, the detent descends downward abutting against the tang 23 of the end 22 of the cable, due to the bias of spring 50. In this position, the detent is retained by the abutment surfaces 26 and 27, respectively, of the head 24 and of the cylinder 25 of the end of the cable. When the detent is in this position any traction of the cable 20 does not allow disengagement of the end 22 of the cable from the front cavity 60 of the tubular body, since the end of the head of the cable abuts against the detent.

Opening of the fastening device 30 proves simple and immediate. In fact the user must simply press the rear end 45 of the pawl 43, so as to bring about a clockwise rotation of the pawl 43 around the pivot 42. Consequently the detent 46 lifts, freeing the end 22 of the cable 20 which can be extracted from the cavity 60 of the tubular body.

## Claims

1. A fastening device (30) for a cable (20) for snow chains (2), said cable (20) comprising a first end (21) irremovably fixed to one end of said closing device and a second end (22) free to be inserted in/removed from the other end of said fastening device to be able to close said cable in a ring or open the ring formed thereby, said fastening device comprising a pawl (43) hinged to the body (31) of said fastening device, said pawl comprising engagement means (46) able to engage said second free end (22) of the cable so as to allow closing in a ring of the cable (20) and a protruding part (45) that can be operated manually by the user to disengage said free end (22) of the cable from said engagement means (46) of the fastening device, so as to allow extraction of said free end of the cable from the fastening device and thus opening of the ring formed by the cable (20), **characterized in that** said fastening device consists of a tubular body (31) which has a rear cavity (61) for fixing of said first end (21) of the cable (20) and a front cavity (60) for insertion/removal of said free end (22) of the cable.

2. A device according to claim 1, **characterized in that** said engagement means of said pawl (43) are a detent (46) disposed in said front cavity (60) to block said free end (22) of said cable.

3. A device according to any one of the preceding claims, **characterized in that** it further comprises a spring (50) which pushes said pawl (43) to keep it in the closed position.

4. A device according to claim 2 or 3, **characterized in that** said free end (22) of the cable comprises an ogive head (24), a cylindrical block (25) and a cylindrical tang (23) interposed between the head (24) and the block (25), the tang (23) having a smaller diameter than the head (24) and the block (25) so that the detent (46) can abut against the tang (23) and remain blocked between the cylindrical block (25) and the ogive head (24).

5. A device according to any one of the preceding claims, **characterized in that** it further comprises a wall (32) having an aperture (34) at the base of which is hinged a hook (35) for hooking a link of a chain portion (10) of said snow chain (2).

6. A device according to any one of the preceding claims, **characterized in that** said first end (21) of the cable (20) is fixed to said fastening device, so as to allow relative rotation around the axis of the cable (20) with respect to the fastening device (30) and prevent axial shifting of the cable (20).

7. A device according to claim 6, **characterized in that** said first end (21) of the cable (20) has at least one cylindrical block (28) with a greater diameter than the diameter of the cable (20) and that said said rear cavity (61) of the body of the fastening device has at least one transverse aperture (62) to house said cylindrical block (28) of the cable (20).

8. A device according to any one of the preceding claims, **characterized in that** the body of said fastening device is made from a plate of sheet metal which is folded so as to form a substantially tubular body (31) with a longitudinal cylindrical cavity (40) and the end flaps of said sheet are superimposed so as to form a longitudinal wall (32).

## Patentansprüche

1. Eine Schließvorrichtung (30) für ein Kabel (20) für Schneeketten (2), wobei das genannte Kabel (20) ein ersten Ende (21) umfasst, das unentfernbar an einem Ende der genannten Schließvorrichtung befestigt ist, und ein zweites freies Ende (22), das jeweils in das andere Ende eingesetzt/vom anderen Ende der genannten Schließvorrichtung entfernt werden kann, um das genannte Kabel ringförmig zu schließen bezw. den dadurch hergestellten Ring zu öffnen, wobei die genannte Schließvorrichtung eine Sperrklinke (43) umfasst, die am Körper (31) der genannten Schließvorrichtung angelenkt ist und die genannte Sperrklinke Einrastelemente (46) umfasst, die geeignet sind, das genannte zweite freie Ende (22) des Kabels einrasten zu lassen, um die ringförmige Schließung des Kabels (20) zu ermöglichen, sowie ein vorstehendes Teil (45), das vom Benutzer von Hand betätigt werden kann, um das genannte freie Ende (22) des Kabels aus den genannten Einrastmitteln (46) der Schließvorrichtung auszurücken, so dass ein Herausziehen des genannten freien Endes des Kabels aus der Schließvorrichtung und somit die Öffnung des Rings gestattet werden, der durch das Kabel (20) gebildet wird, **dadurch gekennzeichnet, dass** die genannte Schließvorrichtung aus einem röhrenförmigen Körper (31) besteht, der einen rückseitigen Hohlraum (61) zur Befestigung des genannten ersten Endes (21) des Kabels (20) und einen vorderen Hohlraum (60) zum jeweiligen Einsetzen/Entfernen des genannten freien Endes (22) des Kabels aufweist.

2. Eine Vorrichtung gemäß Anspruch 1, **dadurch gekennzeichnet, dass** die genannten Einrastelemente der genannten Sperrklinke (43) eine Arretierung (46) sind, die die in dem genannten vorderen Hohlraum (60) angeordnet ist, um das genannte freie Ende (22) des genannten Kabels zu arretieren.

3. Eine Vorrichtung gemäß einem beliebigen der vorausgegangenen Ansprüche, **dadurch gekennzeichnet, dass** sie des weiteren eine Feder (50) umfasst, die gegen die genannte Sperrklinke (43) drückt, um sie in der geschlossenen Stellung zu halten.

4. Eine Vorrichtung gemäß Anspruch 2 oder 3, **dadurch gekennzeichnet, dass** das genannte freie Ende (22) des Kabels einen Spitzbogenkopf (24), einen zylindrischen Block (25) und einen zylindrischen Zapfen (23) umfasst, der zwischen dem Kopf (24) und dem Block (25) liegt, wobei der Zapfen (23) jeweils einen geringeren Durchmesser als der Kopf (24) und der Block (25) aufweist, so dass die Arretierung (46) gegen den Zapfen (23) anschlagen und zwischen dem zylindrischen Block (25) und dem Spitzbogenkopf (24) blockiert werden kann.

5. Eine Vorrichtung gemäß einem beliebigen der vorausgegangenen Ansprüche, **dadurch gekennzeichnet, dass** sie des weiteren eine Wand (32) umfasst, die eine Öffnung (34) aufweist, an deren Basis ein Haken (35) zum Verhaken eines Glieds eines Kettenabschnitts (10) der genannten Schneekette (2) angelenkt ist.

6. Eine Vorrichtung gemäß einem beliebigen der vorausgegangenen Ansprüche, **dadurch gekennzeichnet, dass** das genannte erste Ende (21) des Kabels (20) an der genannten Schließvorrichtung befestigt ist, so dass die entsprechende Drehung um die Achse des Kabels (20) im Verhältnis zur Schießvorrichtung (30) gestattet und eine axiale Verschiebung des Kabels (20) vermieden wird.

7. Eine Vorrichtung gemäß Anspruch 6, **dadurch gekennzeichnet, dass** das erste Ende (21) des Kabels (20) mindestens einen zylindrischen Block (28) aufweist, der einen größeren Durchmesser als der Durchmesser des Kabels (20) hat und dass der genannten rückseitige Hohlraum (61) des Körpers der Schließvorrichtung mindestens eine Queröffnung (62) aufweist, um den genannten zylindrischen Block (28) des Kabels (20) unterzubringen.

8. Eine Vorrichtung gemäß einem beliebigen der vorausgegangenen Ansprüche, **dadurch gekennzeichnet, dass** der Körper der genannten Schließvorrichtung aus einem Blatt Metallfolie besteht, die so gebogen ist, dass sie einem im wesentlichen rohrförmigen Körper (31) mit einem zylindrischen Längshohlraum (40) bildet, und die Endlaschen der genannten Folie so übereinander liegen, dass sie eine Längswand (32) bilden.

## Revendications

1. Dispositif de fermeture (30) d'un câble (20) de chaînes à neige (2), ledit câble (20) comprenant une première extrémité (21) fixée de façon inamovible à une extrémité dudit dispositif de fermeture et une deuxième extrémité (22) libre pour pouvoir être insérée dans/retirée de l'autre extrémité dudit dispositif de fermeture afin de pouvoir fermer ledit câble en boucle ou d'ouvrir la boucle formée par ledit câble, ledit dispositif de fermeture comprenant un encliquetage (43) monté sur pivots sur ledit corps (31) dudit dispositif de fermeture, ledit encliquetage comprenant des dispositifs d'engagement (46) en mesure d'engager ladite deuxième extrémité libre (22) du câble de manière à permettre la fermeture en boucle du câble (20) et une saillie (45) pouvant être manipulée manuellement par l'usager pour désengager ladite extrémité libre (22) du câble desdits dispositifs d'engagement (46) du dispositif de fermeture, de façon à permettre l'extraction de ladite extrémité libre du câble dudit dispositif de fermeture et ensuite l'ouverture de la boucle formée par le câble (20), **caractérisé en ce que** ledit dispositif de fermeture se compose d'un corps tubulaire (31) qui présente une cavité arrière (61) pour fixer ladite première extrémité (21) du câble (20) et une cavité frontale (60) pour l'introduction/le retrait de ladite extrémité libre (22) du câble.

2. Dispositif selon la revendication 1, **caractérisé en ce que** lesdits dispositifs d'engagement dudit encliquetage (43) sont une dent (46) placée dans ladite cavité frontale (60) pour bloquer ladite extrémité libre (22) dudit câble.

3. Dispositif selon une revendication quelconque parmi les revendications susmentionnées, **caractérisé en ce qu'**il comprend également un ressort (50) qui pousse ledit encliquetage (43) pour le maintenir dans la position de fermeture.

4. Dispositif selon la revendication 2 ou 3, **caractérisé en ce que** ladite extrémité libre (22) du câble comprend une tête à ogive (24), un bloc cylindrique (25) et une queue cylindrique (23) interposée entre la tête (24) et le bloc (25), la queue (23) présentant un diamètre plus petit que celui de la tête (24) et celui du bloc (25) de façon que la dent (46) puisse aller en butée contre la queue (23) et rester bloquée entre le bloc cylindrique (25) et la tête à ogive (24).

5. Dispositif selon une revendication quelconque parmi les revendications susmentionnées, **caractérisé en ce qu'**il comprend également une paroi (32) ayant une ouverture (34) à la base de laquelle un crochet est monté sur pivots (35) pour accrocher une maille d'une partie de la chaîne (10) de ladite chaîne à neige (2).

6. Dispositif selon une revendication quelconque parmi les revendications susmentionnées, **caractérisé en ce que** ladite première extrémité (21) du câble (20) est fixée audit dispositif de fermeture, de façon à permettre la rotation correspondante autour de l'axe du câble (20) par rapport au dispositif de fermeture (30) et empêcher le déplacement axial du câble (20).

7. Dispositif selon la revendication 6, **caractérisé en ce que** ladite première extrémité (21) du câble (20) présente au moins un bloc cylindrique (28) avec un diamètre plus grand que le diamètre du câble (20) et **en ce que** ladite cavité arrière (61) du corps du dispositif de fermeture possède au moins une ouverture transversale (62) pour accueillir ledit bloc cylindrique (28) du câble (20).

8. Dispositif selon une revendication quelconque parmi les revendications susmentionnées, **caractérisé en ce que** le corps dudit dispositif de fermeture est réalisé dans une feuille de tôle métallique qui est pliée de manière à former un corps substantiellement tubulaire (31) avec une cavité cylindrique longitudinale (40) et les rabats d'extrémité de ladite tôle sont superposés de manière à former une paroi longitudinale (32).
